# EUROPEAN PATENT SPECIFICATION

(11) **EP 2 114 548 B1**
(45) Date of publication and mention of the grant of the patent: **09.02.2011**
(21) Application number: 08835672.0
(22) Date of filing: 02.10.2008
(51) Int. Cl.: B01D 46/00, B01D 46/02

(54) **BAG FILTER AND METHOD FOR ITS CONSTRUCTION**
BEUTELFILTER UND VERFAHREN FÜR SEINE HERSTELLUNG
FILTRE À SAC ET SON PROCÉDÉ DE CONSTRUCTION

(30) Priority: 02.10.2007 IT MI20071880
(43) Date of publication of application: 11.11.2009
(73) Proprietor: Rd42 Technologies S.r.l. A Socio Unico, 20063 Cernusco sul Naviglio (IT)
(72) Inventor: RADAELLI, Giorgio, 20063 Cernusco sul Naviglio (IT)
(74) Representative: Riccardi, Elisa
(86) International application number: PCT/IB2008/002609
(87) International publication number: WO 2009/044265

(56) References cited:
- WO-A-03/028852
- US-A- 4 264 345

## Description

### Field of the invention

The present invention refers to a bag filter and a method for its construction.

### Prior art

Bag filters are devices adapted to carry out the purification of a gaseous substance from dust suspended therein by means of passage through porous membranes, generally cylindrical in shape and arranged in parallel with each other with respect to the gaseous substance flow, commonly known as "bags".

Typically, the functions carried out in a bag filter comprise: the collection of the gaseous substance to be filtered and its distribution on the bags, the filtration of the gaseous substance by means of its passage through the bags, the collection and evacuation of the extracted dusts, the collection and conveyance of the purified gaseous substance towards an exit section.

From a structural point of view, the known bag filters comprise one or more enclosures connected with each other, which contain a plurality of components related to the aforementioned functions. Specifically, a bag filter normally comprises one or more hoppers for collecting the extracted dust, one or more chambers containing the filtration bags, possibly subdivided in several compartments which may be taken on or off line selectively depending on the operational needs, a volume for collecting the filtered gaseous substance, also known as "plenum", and a bag plate or perforated plate, used both as a support for the filtering bags and to separate the volumes of filtered and unfiltered gaseous substance. Auxiliary components may also be provided such as support and/or access structures for the different components, lighting devices and a variety of instrumentation.

The known bag filters, such as known from US-A-4 264 345, on which the preamble of the main claims is based, are structurally built out of panels, either self-supporting or supported by frames, which are assembled by mechanical fastening, sealing and/or welding. This process takes place, either partially or entirely, in the workshop or at the installation site. Construction may be realised in a single unit or at least partially in a modular way, by assembling previously provided modules adapted to carry out, either individually or in groups, one or more of the aforementioned functions.

WO 03/028852 A and EP 0 847 788 A1 disclose other types of filters inserted into freight containers.

### Summary of the invention

The technical problem underlying the present invention is to provide a bag filter of modular conception that can be constructed in a simple, rapid and economical way.

This problem is solved in the present invention by a bag filter with the characteristics described in appended claim 1, and by a construction method of the same comprising the steps cited in appended claim 11.

In the context of the present description and of the subsequent claims, the term "freight container" is used to indicate an enclosure with a volume of at least 1 m³, adapted to the transport of goods, conceived for repeated use and designed to facilitate all the steps of goods displacement, in particular within the framework of intermodal freight transport.

By employing at least partially pre-existing structures which by their own nature are adapted to form modules, the provision of the functional modules of the bag filter of the invention is considerably simplified and sped up. This in turn affects in a favourable way the whole construction process of the bag filter, in terms of both simplicity and speed, and facilitates all the auxiliary steps of transport, assembly and, when required, disassembly of the bag filter. Furthermore, since decommissioned but structurally functional freight container are readily and economically available, the construction costs can be significantly reduced.

Preferred characteristics of the bag filter of the invention form the object of dependent claims 2-10, the content of which is herein fully incorporated by reference.

Similarly to what stated above about the bag filter of the invention, the method allows the construction of bag filters in a simple, rapid and economical manner.

Preferred characteristics of the method for constructing a bag filter form the object of dependent claims 12-15, the content of which is herein fully incorporated by reference.

### Brief description of the figures

Further characteristics and advantages of the present invention shall become clearer from the following description of some preferred embodiments thereof, made hereafter, for indicating and non limiting purposes, with reference to the accompanying drawings. In these drawings:
- fig 1 is a schematic perspective view of a first preferred embodiment of the bag filter of the invention;
- fig. 2 is a schematic perspective view with partially removed parts of the bag filter shown in fig. 1;
- figures 3-5 are schematic views of respective further embodiments of the bag filter of the invention;
- figures 6a-6f are schematic perspective views of as many functional modules employable in the construction of the bag filters shown in figure 1 and in figures 3-5;
- figure 7 is a schematic perspective view of a further preferred embodiments of the bag filter of the invention;
- figures 8a-8c are schematic perspective views of as many functional modules employable in the construction of the bag filter shown in figure 7, and
- figure 9 is a schematic perspective view with partially removed parts of a further preferred embodiment of the bag filter of the invention.

### Detailed description of some preferred embodiments of the invention

In such figures a bag filter according to invention is globally indicated with reference numeral 100.

The bag filter 100 comprises a plurality of functional modules 1-4 associated with each other and adapted to perform respective functions within the bag filter.

In particular, in the examples illustrated herein, the bag filter 100 comprises a support module 1, a dust collection module 2, a filtration module 3 and a collection module for the filtered gaseous substance or plenum 4, the features of which shall be better illustrated in the remainder.

According to the present invention, the functional modules 1-4 have a respective structure at least partially obtained from one or more freight containers, generically indicated with the reference numeral 10.

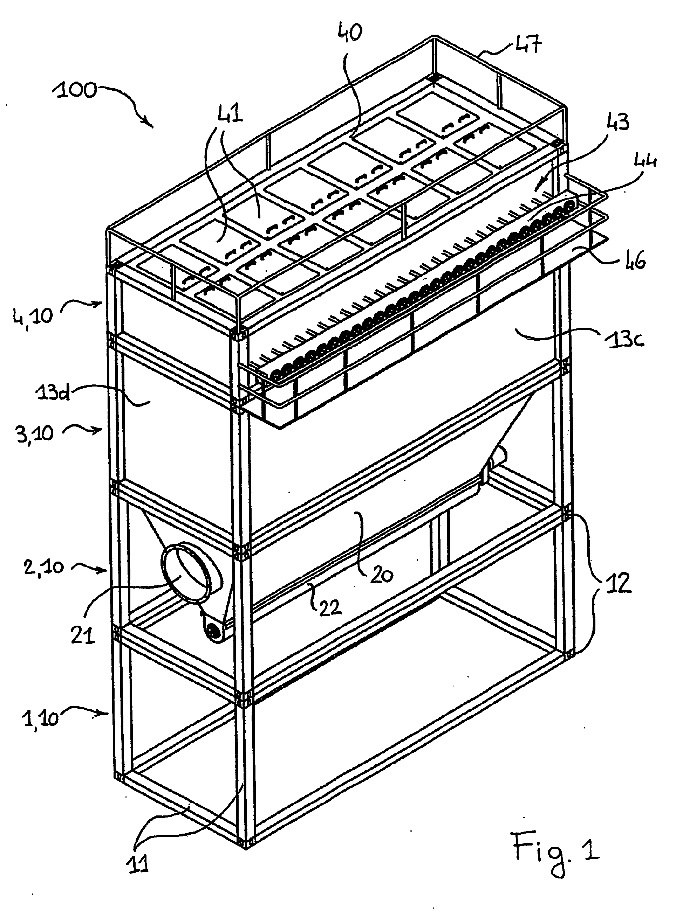

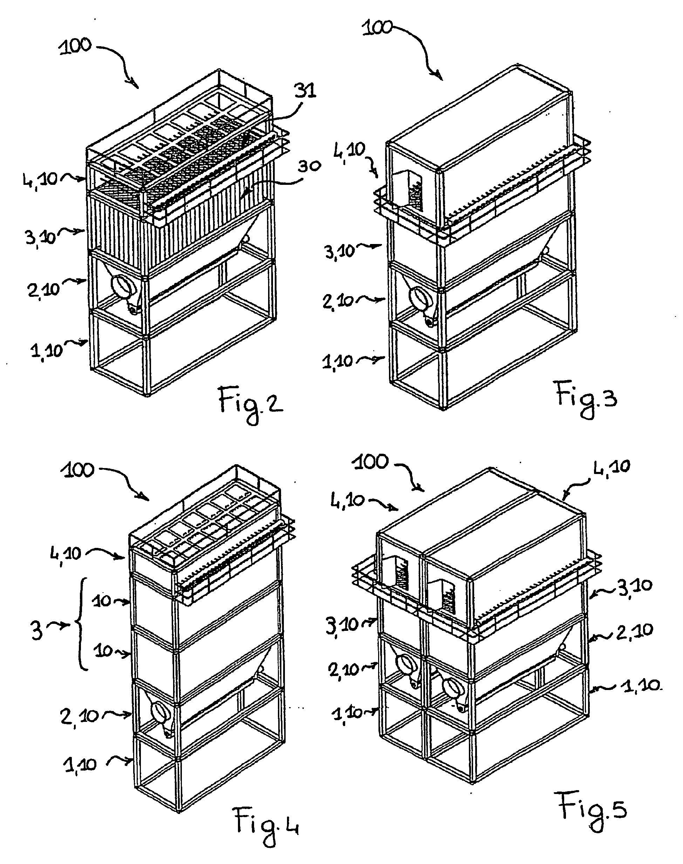

The correspondence between functional modules and freight containers from which they are structurally obtained can be chosen at will, on the basis of the construction requirements. Figures 1-3, 5, 7, and 9 show embodiments of the bag filter 100 in which each functional module 1-4 has a respective structure entirely obtained from a respective freight container 10. Alternatively, it is foreseeable that one or more functional modules 1-4 have a respective structure obtained from two or more freight containers 10, as in the case of the filtration module 3 of the embodiment shown in figure 4, which is obtained from two freight containers 10. In a further variation of the invention, it is foreseeable that one or more functional modules 1-4 have a respective structure obtained from a same freight container 10.

Preferably, the freight containers 10 have a parallelepiped or cubic shape, comprising a plurality of frame members 11 assembled with each other by means of corner fittings 12, in such a way as to define a framework of the freight container, and a plurality of enclosure walls 13 arranged between the frame members 11 and forming an enclosure of the freight container. Usually, among the enclosure walls 13 it is possible to functionally distinguish a base 13a, a roof 13b, a pair of opposing side walls 13c a front wall 13d, normally provided with an access to the freight container, and a rear wall 13e, opposed to the front wall 13d.

More preferably, the freight containers 10 are freight containers conforming to the ISO (International Organisation for Standardization) 1496 standard, i.e. freight containers having a framework with 12 frame members assembled with each other by means of corner fittings, which in turns conform to the ISO 1161 standard, and having characteristic dimensions (usually height and/or length) within predetermined ranges.

Alternatively the freight containers 10 can be freight containers assimilable to the ISO 1496 standard, i.e. freight containers having a framework with 12 frame members assembled with each other by means of corner fittings, which in turn conform to the ISO 1161 standard, but having characteristic dimensions that do not conform to the ISO 1496 standard.

In general, the structural modifications to be performed on the freight containers 10 differ depending on the functional module to be obtained from them.

Preferably, the structures of the functional modules 1-4 comprise at least the frame members 11 and the corner fittings 12 of the freight container or containers 10 from which they are obtained.

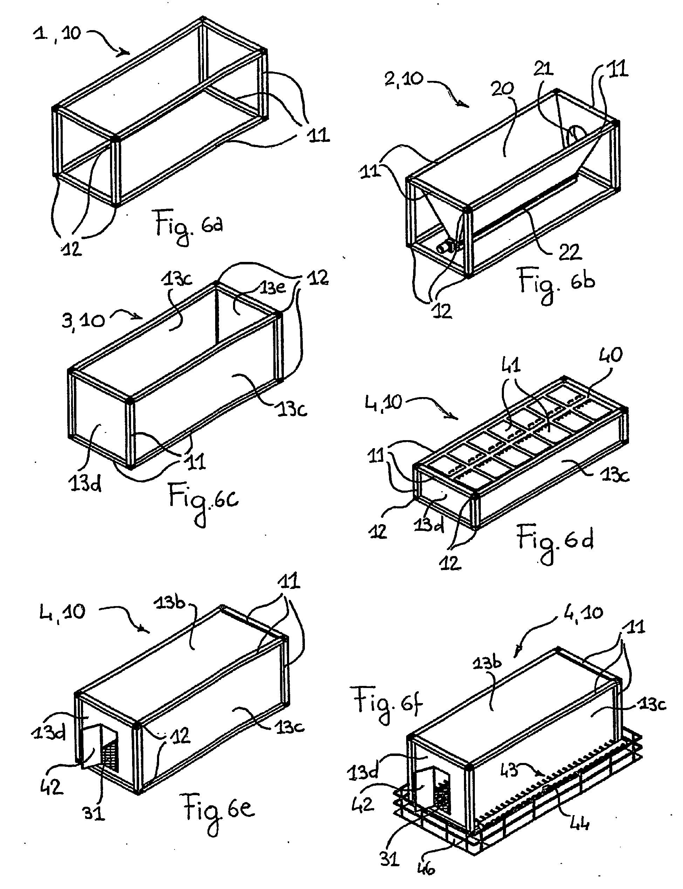

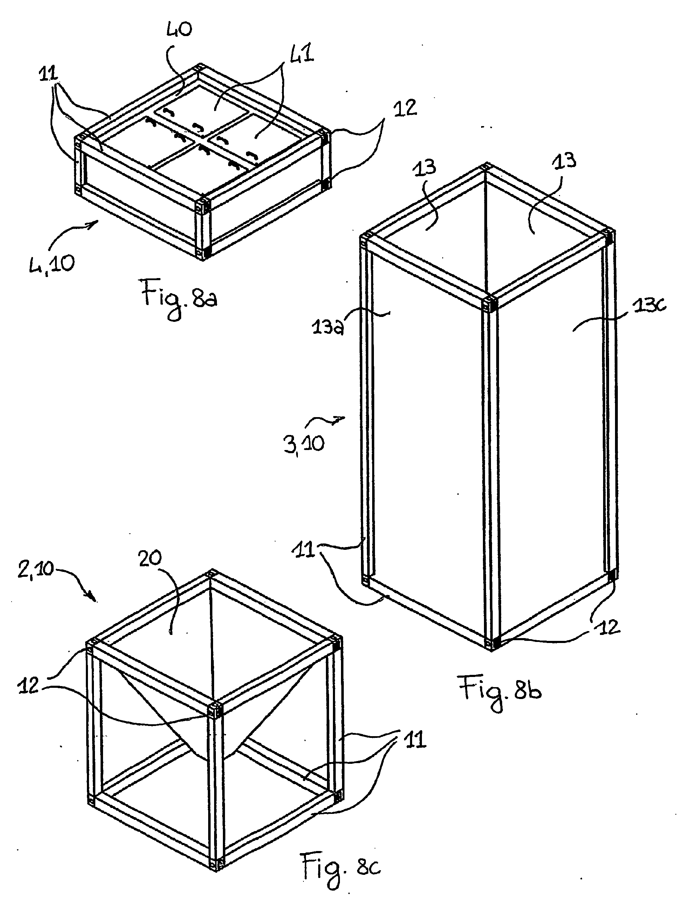

Figures 6a-6f and 8a-8c show preferred embodiments of the functional modules 1-4 obtained from freight containers 10. With the exception of the embodiments of figures 6d, 8a and 8c, the freight containers 10 employed to obtain the functional modules 1-4 in these examples conform to the ISO 1496-I-standard dimensional type 1C.

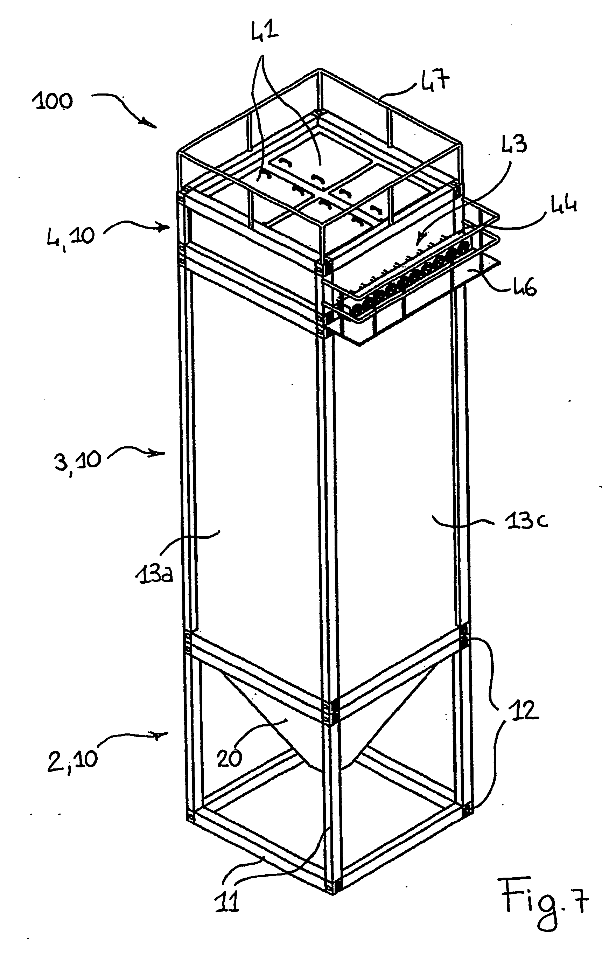

In particular, figure 6a shows a support module 1a, the structure of which preferably consist of the framework a freight container 10, i.e. of only the frame members 11 and the corner fittings 12. If desired, one or more of the original enclosure walls 13 can be retained and/or reinforcing elements, such as, for example, bracing, stiffeners or ribs, can be added to increase the rigidity of the module. The support module 1 is usually employed at the base of the bag filter 100 (figures 1-5), but can also be omitted (figure 7), for example when pillars provided at the installation site are used.

Figure 6b shows a dust collection module 2 with a collection hopper 20. The structure of this module is also based on the framework of a freight container 10. Preferably, the collection hopper 20 has respective walls directly attached, by means of welding or mechanical fastening, to the frame members 11 defining the perimeter of a face of the freight container 10.

At any of the walls of the collecting hopper 20 a flange 21 is formed for connecting a inlet tubing of the gaseous substance (not shown). The collection hopper 20 is also preferably provided with extraction means 22 for the collected dust, in this case of the screw type. However, different types of extraction means can be used, all known to a man skilled in the art, such as for example drag conveyors, sluices valves of the single or double flap type or of the rotary type, fluidized conveyors, dust scrapers.

Another dust collection module 2, different in morphology but conceptually analogous to that of figure 6b, is shown in figure 8c.

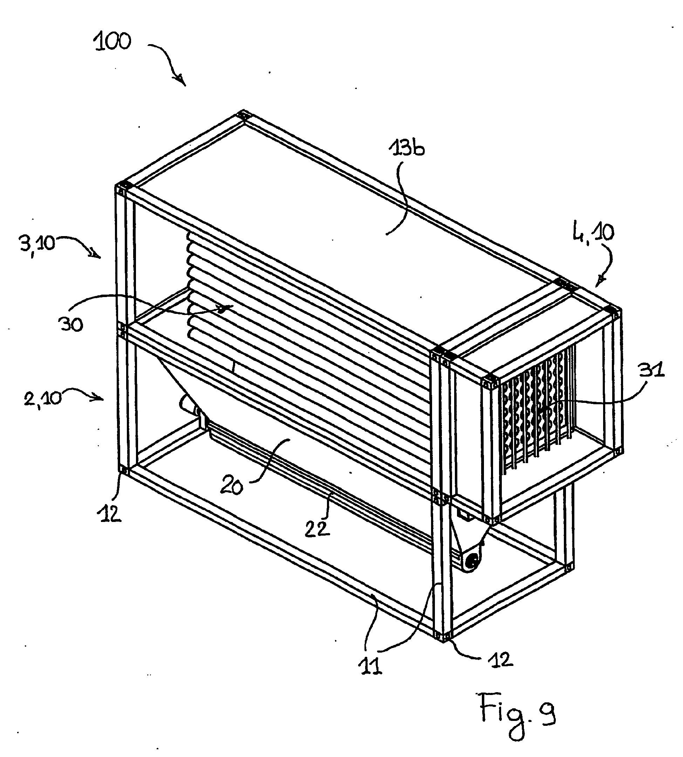

Figure 6c shows a filtration module 3 adapted to house a plurality of filtering bags 30, which are visible in detail in the views with partially removed parts of figure 2 and figure 9. The structure of this module is obtained from a freight container 10 preferably by removing two enclosure walls 13 in order to provide a fluid communication to the functional modules 2 and 4 and, at the same time, to define a lateral enclosure for the filtering bags 30.

The choice of the enclosure walls 13 to be removed is determined by the assembly mode of the functional modules 1-4 and/or by the arrangement of the filtering bags 30 inside the filtration module 3.

If the functional modules 1-4 are to be superimposed in a horizontal position (direction of superposition of the modules parallel to a transverse axis of the freight containers 10), and if the filtering bags 30 are arranged vertically in the filtration module 3 (longitudinal axes of the filtering bags parallel to the direction of superposition of the modules), as in the embodiments of the bag filter 100 shown in figures 1-5, the base 13a and the roof 13b of the freight container 10 are removed (figure 6c). If the functional modules 1-4 are to be superimposed in a vertical position (direction of superposition of the modules parallel to a longitudinal axis of the freight containers 10) and the filtering bags 30 are again arranged vertically in the filtration module 3, as in the embodiment of the bag filter 100 shown in figure 7, the front wall 13d and the back wall 13e of the freight container 10 are removed (figure 8a). If the functional modules 1-4 are to be superimposed in either horizontal or vertical position, but the filtration bags 30 are arranged horizontally inside the filtration module 3 (longitudinal axes of the filtering bags perpendicular to the direction of superposition of the modules), as in the embodiment of the bag filter 100 shown in figure 9, two generic adjacent enclosure walls 13 of the freight container 10 are removed.

In each of the aforementioned configurations, if the length of the filtering bags 30 requires it, it is possible to obtain the structure of the filtration module 3 from two or mode freight containers 10 (figure 4).

The filtering bags 30 are normally connected to a suitable bag plate 31. If the bag plate 31 is associated with the filtration module 3, this is preferably directly attached, by means of mechanical fastening or welding, to the frame members 11 defining the perimeter of one of the faces of the freight container 10, after removal of the corresponding enclosure wall 13.

Figures 6d-6f and 8a show different embodiments of a plenum 4. The structure of this module is obtained from a freight container 10 preferably by removing one or two opposing enclosure walls 13, in order to provide a fluid communication to the filtration module 3 and, if necessary, a suitable equipped wall for the inspection of or the access to the plenum 4. Also in this case, the choice of the enclosure walls 13 to be removed is determined by the assembly mode of the functional modules 1-4.

In particular, figures 6d and 8a show a first embodiment of the plenum 4, in which the base 13a (not visible in the views of these figures) and the roof 13b of the freight container 10 are removed. Instead of the roof 13b, an upper wall 40 is provided, equipped with one or more hatches 41 for the inspection of the plenum 4 and of the filtering bags 30, as well as for mounting or extracting the same. Figures 6e and 6f show another embodiment of the plenum 4, having dimensions suitable for allowing access of personnel inside it. Access takes place by means of an access door 42, either already existing in the freight container 10 or purposely created in one of the enclosure walls 13 of the same. In this case, only one of the enclosure walls 13, normally the base 13a, is removed, while other walls may be structurally modified for specific purposes.

Independently of the specific embodiment of the plenum 4, the bag plate 31 can be associated with this module, rather than with the filtration module 3. Also in this case, the bag plate 31 is preferably directly attached, by means of mechanical fastening or welding, to the frame members 11 defining the perimeter of one of the faces of the freight container 10 from which the corresponding enclosure wall 13 has been removed (figures 6e and 6f).

Preferably, the plenum 4 includes a compressed air distribution system 43, used for cleaning the filtering bags 30. The compressed air distribution system 43 typically comprises a collector to which a plurality of blowing pipes are connected and can be partially or wholly housed in the freight container 10 from which the plenum 4 is obtained. As a way of example, figure 6f shows an embodiment of the plenum 4 in which the compressed air distribution system 43 comprises a collector 44 external to the freight container 10, and internal blowing pipes 44 (not shown).

The plenum 4 is preferably further provided with external gangways 46 and/or handrails 47, providing the necessary access thereto in conditions of safety (figures 1-5, 6f, 7). These components are preferably directly attached to the frame members 11 of the freight container 10 from which the plenum 4 is obtained.

At one or more of the walls of the plenum 4 flanges (not shown) are further provided for connecting discharge tubings of the filtered gaseous substance (again, not shown).

As in the case of the filtration module 3, if necessary the structure of the plenum 4 can be as well obtained from two or more freight containers 10.

In addition to the functional modules 1-4 described above, a covering module (not shown) can be optionally provided, adapted to define an at least partially closed environment at the upper wall of the bag filter 100, for allowing inspection and maintenance operations to be carried out whilst sheltered from the elements. Such module can be equipped with hoists for lifting loads. The structure of this additional functional module can be as well obtained at least partially from a freight container 10, in ways similar to those explained above with reference to the functional modules 1-4.

Figure 5 shows an embodiment of the bag filter 100 in which two units, assembled with functional modules 1-4 described above, are arranged in parallel so as to treat a greater flux of gaseous substance. In this case, it is possible to eliminate one or more enclosure walls 13 at the interface between the two units, or it is possible to obtain from the beginning the structure of one or more of the functional modules 1-4 from pairs of freight containers 10 arranged side by side.

With reference to the preferred embodiments of the bag filter 100 described above, a preferred way of carrying out the method of the invention for constructing a bag filter shall now be described.

The method essentially comprises a first step of providing the functional modules 1-4 and a second step of suitably assembling these modules to obtain the bag filter 100.

The provision of the modules can take place either in the workshop or at the site where the filter is to be installed. The assembly of the modules preferably takes place at the site where the filter is to be installed.

According to the invention, the step of providing the functional modules 1-4 comprises a step of structurally modifying at least partially one or more freight containers 10 in such a way as to obtain the structure of one or more of such functional modules 1-4.

As described with reference to figures 6a-6f and 8a-8c, the step of structurally modifying the freight containers 10 preferably comprises removing partially or totally, replacing or modifying at least one of the enclosure walls 13 thereof.

Depending on the type of functional module and/or on the specific requirements, the step of structurally modifying the freight containers 10 may comprise applying structural reinforcement elements, such as for example bracing, stiffeners or ribs, and/or coupling elements, such as for example coupling flanges, possibly provided with sealing elements, for the subsequent assembly in the bag filter 100.

The step of structurally modifying the freight containers 10 may further comprise the provision, internally and/or externally to the freight container 10, of auxiliary devices of the bag filter 100, such as, for example, compressed air distribution systems, ladders, gangways and/or hatches for access and inspection, handrails, lighting devices, control devices. Whenever possible, this auxiliary devices are preferably attached to frame members 11 of the freight containers 10.

If required, one or more functional modules 1-4 can be provided with thermal insulation, by applying pre-insulated walls in addition to or as a replacement for enclosure walls 13 of the respective freight containers 10, or by applying insulating material internally or externally thereto.

The step of assembling with each other the functional modules 1-4 preferably comprises arranging these functional modules in series and/or in parallel with each other with respect to the direction of a filtration flow in the bag filter.

Preferably, the functional modules 1-4 are juxtaposed so that the corner fittings 12 of the respective freight containers 10 are in contact with each other.

Preferably, moreover, the step of assembling with each other the functional modules 1-4 comprises structurally securing the functional modules 1-4 to each other and airtight sealing joint portions between the functional modules 1-4. The structural securing is preferably obtained by means of mechanical fastening or welding at facing corner fittings 12. The airtight sealing is preferably obtained by welding at facing frame members 11 or by providing welded joint coverings and/or coupling flanges, welded or mechanically fastened, which may comprise gaskets.

## Claims

1. Bag filter (100) comprising a plurality of functional modules (1-4) associated with each other and adapted to perform respective functions in the bag filter (100), **characterised in that** one or more functional modules (1-4) of said plurality of functional modules have a respective structure obtained at least partially from one or more freight containers (10), wherein said one or more freight containers (10) have a parallelepiped or cubic structure comprising a plurality of frame members (11) assembled with each other by means of corner fittings (12) in such a way as to define a framework of the freight container, and enclosure walls (13) arranged between said frame members in such a way as to form an enclosure of the freight container, and wherein at least one of said one or more functional modules (1-4) is a filtration module (3) or a collection module for the filtered gaseous substance (4) comprising a bag plate (31) for the connection of filtering bags, and said bag plate (31) is attached to the frame members defining the perimeter of a face of one of said one or more freight containers (10).

2. Bag filter (100) according to claim 1, wherein the enclosure wall (13) of said face of one of said one or more freight containers (10) has been removed.

3. Bag filter (100) according to claim 1 or 2, wherein each of said one or more functional modules (1-4) has a respective structure obtained at least partially from a respective freight container (10).

4. Bag filter (100) according to claim 1, wherein at least one of said one or more functional modules (1-4) has a respective structure obtained at least partially from two or more freight containers (10).

5. Bag filter (100) according to claim 1 or 4, wherein at least two of said one or more functional modules (1-4) have respective structures obtained at least partially from a same freight container (10).

6. Bag filter (100) according to any one of the previous claims, wherein said one or more freight containers (10) are freight containers conforming or assimilable to the ISO 1496 standard.

7. Bag filter (100) according to any one of the previous claims, wherein the respective structures of said one or more functional modules (1-4) comprise said frame members (11) and said corner fittings (12), and optionally at least one of said enclosure walls (13).

8. Bag filter (100) according to any one of the previous claims, wherein the functional modules of said plurality of functional modules (1-4) are selected from the group comprising: support modules (1), dust collection modules (2), filtration modules (3), collection modules for the filtered gaseous substance (4).

9. Bag filter (100) according to any one of the previous claims, wherein at least one of said one or more functional modules (1-4) is a dust collection module (2) comprising a collection hopper (20), and said collection hopper has respective walls attached to frame members (11) defining the perimeter of a face of one of said one or more freight containers (10).

10. Bag filter (100) according to any one of the previous claims, wherein at least one of said one or more functional modules (1-4) is a collection module for the filtered gaseous substance (4) comprising a compressed air distribution system (43), and said compressed air distribution system (43) is housed partially or entirely inside one of said one or more freight containers (10) or is externally associated with it.

11. Method for constructing a bag filter (100) comprising a plurality of functional modules (1-4) associated with each other and adapted to perform respective functions in the bag filter (100), said method comprising the steps of:
- providing said plurality of functional modules (1-4) of the bag filter, and
- assembling the provided functional modules (1-4) with each other,
**characterised in that** said step of providing said plurality of functional modules (1-4) comprises a step of:
- structurally modifying at least partially one or more freight containers (10) in such a way as to obtain the structure of one or more functional modules of said plurality of functional modules (1-4),
wherein said one or more freight containers (10) have a structure substantially parallelepiped in shape comprising a plurality of frame members (11) assembled with each other by means of corner fittings (12) in such a way as to define the framework of the freight container, and enclosure walls (13) arranged between said frame members as to form an enclosure of the freight container, and wherein at least one of said one or more functional modules (1-4) is a filtration module (3) or a collection module for the filtered gaseous substance (4) comprising a bag plate (31) for the connection of filtering bags, and wherein said step of structurally modifying at least partially one or more of the freight containers (10) comprises removing partially or totally, replacing or modifying at least one of said enclosure walls (13) and attaching said bag plate (31) to the frame members defining the perimeter of a face of one of said one or more freight containers (10).

12. Method according to claim 11, wherein said step of structurally modifying at least partially one or more of the freight containers (10) further comprises removing the enclosure wall (13) of said face of one of said one or more freight containers (10) before attaching said bag plate (31) to the frame members.

13. Method according to claim 11 or 12, wherein said step of structurally modifying at least partially one or more of the freight containers (10) comprises removing partially or totally, replacing or modifying at least one of said enclosure walls (13), and optionally applying structural reinforcement elements and/or coupling elements.

14. Method according to any one of claims 11-13, wherein said step of assembling with each other the provided functional modules (1-4) comprises the step of:
- arranging said functional modules (1-4) in series and/or in parallel with each other with respect to the direction of a filtration flow in the bag filter.

15. Method according to claim 14, wherein said step of assembling with each other the provided functional modules (1-4) further comprises the steps of:
- structurally securing said functional modules (1-4) to each other, and
- airtight sealing joint portions between said functional modules (1-4).

## Patentansprüche

1. Beutelfilter (100), mit einer Vielzahl von Funktionseinheiten (1-4), die einander zugeordnet und dazu geeignet sind, jeweils Funktionen im Beutelfilter (100) auszuführen, **dadurch gekennzeichnet, dass** eine oder mehrere Funktionseinheiten (1-4) der Vielzahl von Funktionseinheiten jeweils eine Struktur aufweisen, die zumindest teilweise von einem oder mehreren Frachtcontainern (10) erhalten wird, wobei ein oder mehrere Frachtcontainer (10) eine quaderförmige oder kubische Struktur mit mehreren Rahmenelementen (11) aufweisen, die mit Eckbeschlägen (12) so zusammengebaut sind, dass sie einen Rahmen des Frachtcontainers definieren, und mit Umhüllungswänden (13), die so zwischen den Rahmenelementen angeordnet sind, dass sie eine Umhüllung des Frachtcontainers bilden, und wobei mindestens eine der mindestens einen Funktionseinheit (1-4) eine Filtereinheit (3) oder eine Auffangeinheit (4) für die gefilterte gasförmige Substanz ist, die eine Beutelplatte (31) zum Anschließen von Filterbeuteln aufweist, wobei die Beutelplatte (31) an den Rahmenelementen befestigt ist, die den Umfang einer Fläche eines Frachtcontainers des mindestens einen Frachtcontainers (10) definieren.

2. Beutelfilter (100) nach Anspruch 1, bei dem die Umhüllungswand (13) der Fläche eines Frachtcontainers des mindestens einen Frachtcontainers (10) entfernt wurde.

3. Beutelfilter (100) nach Anspruch 1 oder 2, bei dem jede Funktionseinheit der mindestens einen Funktionseinheit (1-4) jeweils eine Struktur aufweist, die zumindest teilweise von einem jeweiligen Frachtcontainer (10) erhalten wird.

4. Beutelfilter (100) nach Anspruch 1, bei dem mindestens eine der einen oder mehreren Funktionseinheiten (1-4) jeweils eine Struktur aufweist, die zumindest teilweise von mindestens zwei Frachtcontainern (10) erhalten wird.

5. Beutelfilter (100) nach Anspruch 1 oder 4, bei dem mindestens zwei der einen oder mehreren Funktionseinheiten (1-4) jeweils eine Struktur aufweisen, die zumindest teilweise von ein und demselben Frachtcontainer (10) erhalten wird.

6. Beutelfilter (100) nach einem der vorhergehenden Ansprüche, bei dem ein oder mehrere Frachtcontainer (10) Frachtcontainer sind, die dem ISO 1496-Standard entsprechen oder damit vereinbar sind.

7. Beutelfilter (100) nach einem der vorhergehenden Ansprüche, bei dem die jeweiligen Strukturen der einen oder mehreren Funktionseinheiten (1-4) die Rahmenelemente (11) und die Eckbeschläge (12) und optional mindestens eine der Umhüllungswände (13) aufweisen.

8. Beutelfilter (100) nach einem der vorhergehenden Ansprüche, bei dem die Funktionseinheiten der Vielzahl von Funktionseinheiten (1-4) aus der Gruppe ausgewählt sind, die folgendes umfasst: Stützeinheiten (1), Staubauffangeinheiten (2), Filtereinheiten (3), Auffangeinheiten (4) für die gefilterte gasförmige Substanz.

9. Beutelfilter (100) nach einem der vorhergehenden Ansprüche, bei dem mindestens eine der einen oder mehreren Funktionseinheiten (1-4) eine Staubauffangeinheit (2) mit einem Staubtrichter (20) ist und der Staubtrichter Wände aufweist, die jeweils an Rahmenelemente (11) befestigt sind, die den Umfang einer Fläche eines Frachtcontainers des mindestens einen Frachtcontainers (10) definieren.

10. Beutelfilter (100) nach einem der vorhergehenden Ansprüche, bei dem mindestens eine der einen oder mehreren Funktionseinheiten (1-4) eine Auffangeinheit (4) für die gefilterte gasförmige Substanz mit einem Druckluftverteilungssystem (43) ist, wobei das Druckluftverteilungssystem (43) teilweise oder vollständig in einem Frachtcontainer des mindestens einen Frachtcontainers (10) untergebracht oder extern diesem zugeordnet ist.

11. Verfahren zum Herstellen eines Beutelfilters (100), mit einer Vielzahl von Funktionseinheiten (1-4), die einander zugeordnet und dazu geeignet sind, jeweils Funktionen im Beutelfilter (100) auszuführen, wobei das Verfahren folgende Schritte umfasst:
- Bereitstellen der Vielzahl von Funktionseinheiten (1-4) des Beutelfilters und
- Zusammenbauen der bereitgestellten Funktionseinheiten (1-4),
**dadurch gekennzeichnet, dass** der Schritt des Bereitstellens der Vielzahl von Funktionseinheiten (1-4) einen Schritt umfasst, bei dem:
- ein oder mehrere Frachtcontainer (10) zumindest teilweise strukturell so verändert werden, dass die Struktur einer oder mehrerer Funktionseinheiten der Vielzahl von Funktionseinheiten (1-4) erhalten wird,
wobei der oder die mehreren Frachtcontainer (10) eine im Wesentlichen quaderförmige Struktur mit mehreren Rahmenelementen (11) aufweisen, die mit Eckbeschlägen (12) so zusammengebaut sind, dass sie den Rahmen des Frachtcontainers definieren, und mit Umhüllungswänden (13), die so zwischen den Rahmenelementen angeordnet sind, dass sie eine Umhüllung des Frachtcontainers bilden, und wobei mindestens eine der mindestens einen Funktionseinheiten (1-4) eine Filtereinheit (3) oder eine Auffangeinheit (4) für die gefilterte gasförmige Substanz ist, die eine Beutelplatte (31) zum Anschließen von Filterbeutein aufweist, wobei der Schritt, bei dem einer oder mehrere der Frachtcontainer (10) zumindest teilweise strukturell verändert werden, das teilweise oder vollständige Entfernen, das Ersetzen oder Verändern mindestens einer der Umhüllungswände (13) und das Befestigen der Beutelplatte (31) an den Rahmenelementen umfasst, die den Umfang einer Fläche eines Frachtcontainers des mindestens einen Frachtcontainers (10) definieren.

12. Verfahren nach Anspruch 11, bei dem der Schritt, bei dem einer oder mehrere der Frachtcontainer (10) zumindest teilweise strukturell verändert werden, ferner das Entfernen der Umhüllungswand (13) der Fläche eines Frachtcontainers des mindestens einen Frachtcontainers (10) umfasst, bevor die Beutelplatte (31) an den Rahmenelementen befestigt wird.

13. Verfahren nach Anspruch 11 oder 12, bei dem der Schritt, bei dem einer oder mehrere der Frachtcontainer (10) zumindest teilweise strukturell verändert werden, das teilweise oder vollständige Entfernen, das Ersetzen oder Verändern mindestens einer der Umhüllungswände (13) und optional das Aufbringen von strukturellen Verstärkungselementen und/oder Verbindungselementen umfasst.

14. Verfahren nach einem der Ansprüche 11 bis 13, bei dem der Schritt des Zusammenbauens der bereitgestellten Funktionseinheiten (1-4) den Schritt umfasst, bei dem:
- die Funktionseinheiten (1-4) bezüglich der Richtung eines Filtrationsstroms im Beutelfilter in Reihe und/oder parallel zueinander geschaltet werden.

15. Verfahren nach Anspruch 14, bei dem der Schritt des Zusammenbauens der bereitgestellten Funktionseinheiten (1-4) ferner den Schritt umfasst, bei dem:
- die Funktionseinheiten (1-4) strukturell aneinander befestigt werden und
- Verbindungsabschnitte zwischen den Funktionseinheiten (1-4) luftdicht versiegelt werden.

## Revendications

1. Filtre à sacs (100) comprenant une pluralité de modules fonctionnels (1 à 4) associés les uns aux autres et conçus pour réaliser des fonctions respectives dans le filtre à sacs (100), **caractérisé en ce qu'**un ou plusieurs modules fonctionnels (1 à 4) de ladite pluralité de modules fonctionnels présentent une structure respective obtenue au moins partiellement à partir d'un ou plusieurs conteneurs de transport (10), dans lequel lesdits un ou plusieurs conteneurs de transport (10) présentent une structure de forme parallélépipédique ou cubique comprenant une pluralité d'éléments de châssis (11) assemblés les uns avec les autres au moyen de raccords de coin (12) de telle manière à définir un châssis du conteneur de transport, et des parois d'enceinte (13) agencées entre lesdits éléments de châssis de telle manière à former une enceinte du conteneur de transport, et dans lequel au moins un desdits un ou plusieurs modules fonctionnels (1 à 4) est un module de filtrage (3) ou un module de recueil de la substance gazeuse filtrée (4) comprenant une plaque pour sacs (31) destinée au raccord de sacs de filtrage, et ladite plaque pour sacs (31) est rattachée aux éléments de châssis définissant le périmètre d'une face de l'un desdits un ou plusieurs conteneurs de transport (10).

2. Filtre à sacs (100) selon la revendication 1, dans lequel la paroi d'enceinte (13) de ladite face d'un desdits un ou plusieurs conteneurs de transport (10) a été retirée.

3. Filtre à sacs (100) selon la revendication 1 ou 2, dans lequel chacun desdits un ou plusieurs modules fonctionnels (1 à 4) présente une structure respective obtenue à partir au moins partiellement d'un conteneur de transport respectif (10).

4. Filtre à sacs (100) selon la revendication 1, dans lequel au moins un desdits un ou plusieurs modules fonctionnels (1 à 4) présente une structure respective obtenue au moins partiellement à parti de deux ou plusieurs conteneurs de transport (10).

5. Filtre à sacs (100) selon la revendication 1 ou 4, dans lequel au moins deux desdits un ou plusieurs modules fonctionnels (1 à 4) présentent des structures respectives obtenues au moins partiellement à partir d'un même conteneur de transport (10).

6. Filtre à sacs (100) selon l'une quelconque des revendications précédentes, dans lequel lesdits un ou plusieurs conteneurs de transport (10) sont des conteneurs de transport se conformant à la norme ISO 1496 ou assimilables à celle-ci.

7. Filtre à sacs (100) selon l'une quelconque des revendications précédentes, dans lequel les structures respectives desdits un ou plusieurs modules fonctionnels (1 à 4) comprennent lesdits éléments de châssis (11) et lesdits raccords de coin (12) et optionnellement au moins une desdites parois d'enceinte (13).

8. Filtre à sacs (100) selon l'une quelconque des revendications précédentes, dans lequel les modules fonctionnels de ladite pluralité de modules fonctionnels (1 à 4) sont sélectionnés à partir du groupe comprenant : des modules de support (1), des modules de recueil de poussières (2), des modules de filtrage (3), des modules de recueil de la substance gazeuse filtrée (4).

9. Filtre à sacs (100) selon l'une quelconque des revendications précédentes, dans lequel au moins un desdits un ou plusieurs modules fonctionnels (1 à 4) est un module de recueil de poussières (2) comprenant une trémie de recueil (20) et ladite trémie de recueil comporte des parois respectives fixées aux éléments de châssis (11) définissant le périmètre d'une face d'un desdits un ou plusieurs conteneurs de transport (10).

10. Filtre à sacs (100) selon l'une quelconque des revendications précédentes, dans lequel au moins un desdits un ou plusieurs modules fonctionnels (1 à 4) est un module de recueil de la substance gazeuse filtrée (4) comprenant un système de distribution à air comprimé (43), et ledit système de distribution à air comprimé (43) est logé partiellement ou entièrement à l'intérieur d'un desdits un ou plusieurs conteneurs de transport (10) ou est associé à celui-ci à l'extérieur.

11. Procédé de construction d'un filtre à sacs (100) comprenant une pluralité de modules fonctionnels (1 à 4) associés les uns aux autres et conçus pour réaliser des fonctions respectives dans le filtre à sacs (100), ledit procédé comprenant les étapes consistant à :
- fournir ladite pluralité de modules fonctionnels (1 à 4) du filtre à sacs, et
- assembler les modules fonctionnels fournis (1 à 4) les uns avec les autres,
**caractérisé en ce que** ladite étape de fourniture de ladite pluralité de modules fonctionnels (1 à 4) comprend une étape consistant à :
- modifier structurellement au moins partiellement un ou plusieurs conteneurs de transport (10) de telle manière à obtenir la structure d'un ou plusieurs modules fonctionnels de ladite pluralité de modules fonctionnels (1 à 4),
dans lequel lesdits un ou plusieurs conteneurs de transport (10) présentent une structure de forme sensiblement parallélépipédique comprenant une pluralité d'éléments de châssis (11) assemblés les uns avec les autres au moyen de raccords de coin (12) de telle manière à définir le châssis du conteneur de transport, et des parois d'enceinte (13) agencées entre lesdits éléments de châssis de façon à former une enceinte du conteneur de transport, et dans lequel au moins un desdits un ou plusieurs modules fonctionnels (1 à 4) est un module de filtrage (3) ou un module de recueil de la substance gazeuse filtrée (4) comprenant une plaque pour sacs (31) destinée au raccord de sacs de filtrage, et dans lequel ladite étape de modification structurelle au moins partiellement d'un ou plusieurs des contenants de transport (10) comprend le retrait partiel ou total, le remplacement ou la modification d'au moins une desdites parois d'enceinte (13) et la fixation de ladite plaque pour sacs (31) aux éléments de châssis définissant le périmètre d'une face d'un desdits un ou plusieurs conteneurs de transport (10).

12. Procédé selon la revendication 11, dans lequel ladite étape de modification structurelle au moins partiellement d'un ou plusieurs des conteneurs de transport (10) comprend en outre le retrait de la paroi d'enceinte (13) de ladite face d'un desdits un ou plusieurs conteneurs de transport (10) avant la fixation de ladite plaque pour sacs (31) aux éléments de châssis.

13. Procédé selon la revendication 11 ou 12, dans lequel ladite étape de modification structurelle au moins partiellement d'un ou plusieurs des conteneurs de transport (10) comprend le retrait partiel ou total, le remplacement ou la modification d'au moins une desdites parois d'enceinte (13), et l'application optionnelle d'éléments de renfort structurel et/ou d'éléments de couplage.

14. Procédé selon l'une quelconque des revendications 11 à 13, dans lequel ladite étape d'assemblage les uns avec les autres des modules fonctionnels fournis (1 à 4) comprend l'étape consistant à :
- agencer lesdits modules fonctionnels (1 à 4) à la suite et/ou parallèlement les uns aux autres par rapport à la direction d'un écoulement de filtrage dans le filtre à sacs.

15. Procédé selon la revendication 14, dans lequel ladite étape d'assemblage les uns avec les autres des modules fonctionnels fournis (1 à 4) comprend en outre les étapes consistant à :
- fixer structurellement lesdits modules fonctionnels (1 à 4) les uns aux autres, et
- sceller de façon étanche à l'air des parties de joints entre lesdits modules fonctionnels (1 à 4).
